# EUROPEAN PATENT SPECIFICATION

(11) **EP 2 323 477 B1**
(45) Date of publication and mention of the grant of the patent: **09.04.2014**
(21) Application number: 09786933.3
(22) Date of filing: 13.08.2009
(51) Int. Cl.: A01K 13/00

(54) **Shin boot for horses**
Gamasche zum Schutz von Pferdebeinen
Guêtre pour chevaux

(30) Priority: 29.08.2008 IT BS20080162
(43) Date of publication of application: 25.05.2011
(73) Proprietor: Acavallo S.r.l., 25017 Lonato del Garda (BS) (IT)
(72) Inventor: BENETTI, Mauro, I-25017 Lonato Brescia (IT)
(74) Representative: Chimini, Francesco
(86) International application number: PCT/IB2009/053584
(87) International publication number: WO 2010/023584

(56) References cited:
- DE-A1- 4 206 740
- DE-U1-202006 005 596
- GB-A- 976 715
- GB-A- 2 444 770
- US-A- 3 405 506

## Description

The present invention relates to a horse boot, in other words a shin guard for horses. In particular, the invention relates to an innovative fastening system of the boot to the limb of the horse.

Known boots are normally fastened to the limb of the animal by means of a plurality of laces or elastic straps that connect the two extremities of the protective element that enclose the limb. GB 976 715 A for instance discloses such a known boot from the prior-art.

The laces or elastic straps realize the fastening of the protective element in various manners. The following are used for example:
- velcro;
- buckles;
- through fasteners,
- male and female connectors, such as between a male mushroom shape element and a corresponding shaped female element.

In all cases, the fastening and the release of the boot entails the fastening and the release of several laces or straps and, especially in certain embodiments, said operation requires a certain amount of time and dexterity.

Moreover, Velcro fastening, if on the one hand it is the most rapid fastening system amongst those mentioned, on the other hand it has the disadvantage of being that most subject to wear, losing its efficiency in time.

The purpose of the present invention is to devise and make available a boot that allows to at least partially overcome the disadvantages mentioned above with reference to the prior art.

In particular, a task of the present invention is to make available a boot with a particularly rapid but safe and effective over time fastening (and unfastening) system.

Said purpose and the said tasks are achieved through a boot in accordance with claim 1.

Further characteristics and advantages of the boot according to the invention will result from the description of examples below of preferred embodiments thereof, given for indicative and not limitative purposes, with reference to the attached drawings, wherein:

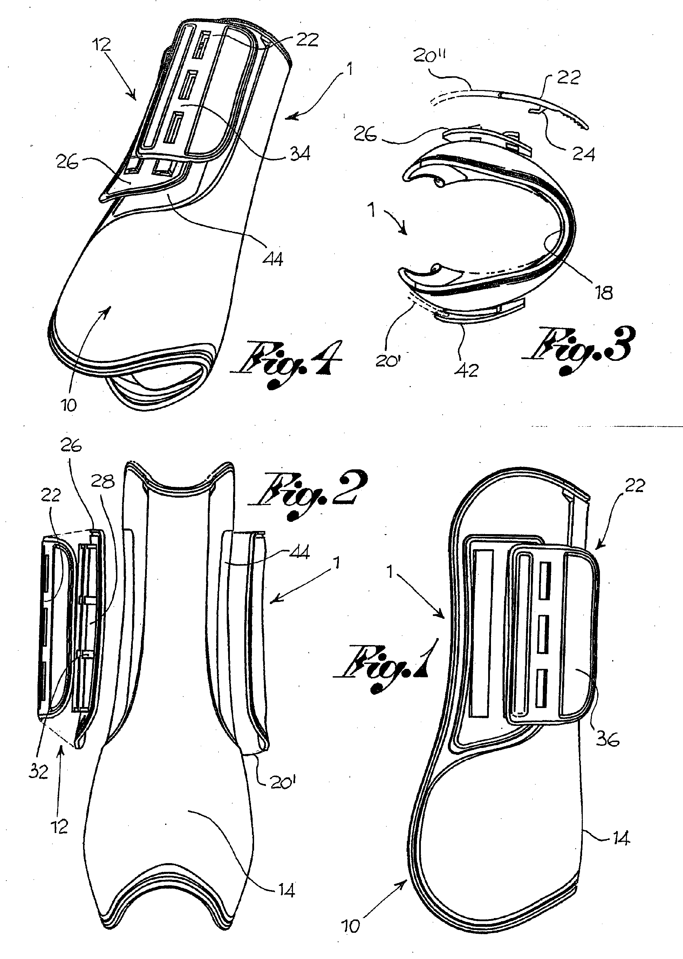

- figures 1 to 4 respectively illustrate exploded, side, front, plan and perspective views of the horse boot according to the invention;

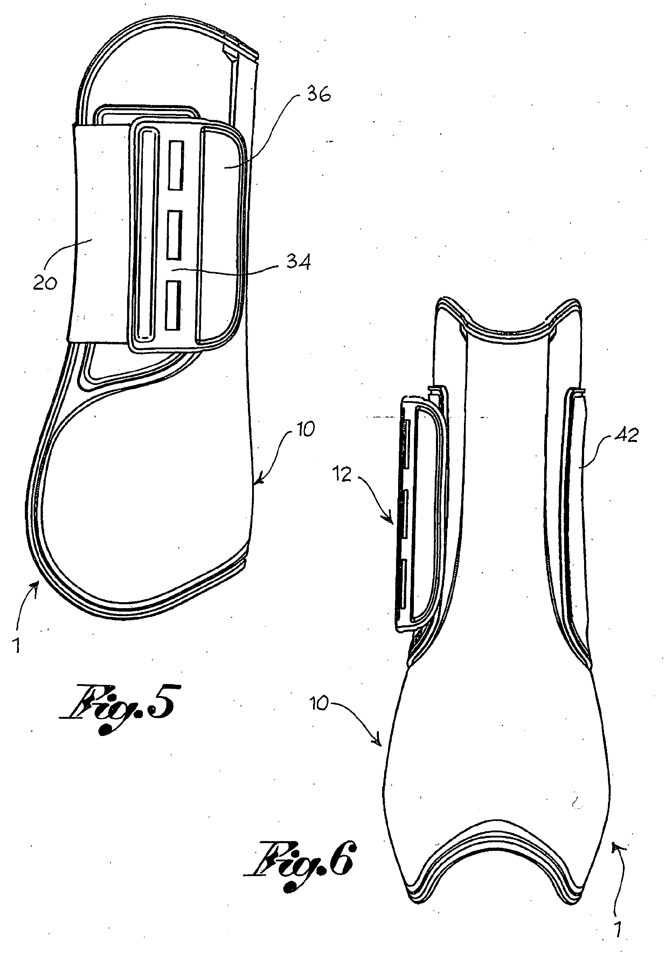

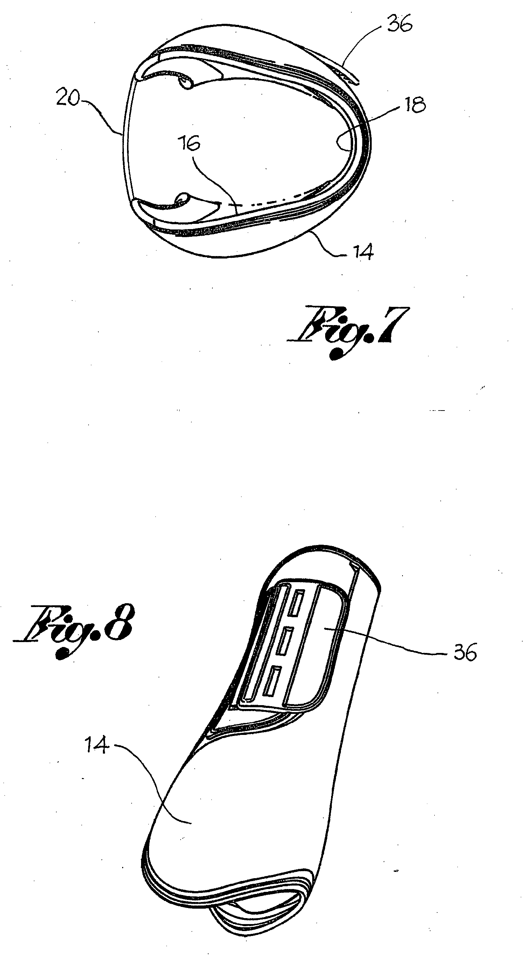

- figures 5 to 8 respectively illustrate side, front, plan and perspective views of the horse boot according to the invention assembled and in the closed position, and
- figure 9 illustrates, in cross section, an enlarged detail of the horse boot's fastening means.

With reference to said figures, reference number 1 indicates a boot according to the invention as a whole. Boot 1 comprises a protective element 10 suitable to at least partially encircle a limb of a horse and fastening means 12 suitable to connect two parts of the protection to firmly secure the protective element to the limb.

The protective element 10 has, in cross section, a substantially "C" form and is shaped to follow the morphology of the shank to which it is applied.

In accordance with an embodiment, the protective element 10 includes an outer shell 14, made for example of a semi-rigid or rigid plastic material, and a softer inner lining 16.

Advantageously, a layer of a silicone gel 18 is also applied to the interior lining having a function of absorbing the impact.

The fastening means 12 comprise a single elastic strap 20 with one end 20' connected to one end of the protective element 10 and to one free end 20" to which is attached to an attachment plate 22.

From said attachment plate 22 extends at least one hook tooth 24 facing backwards and having a longitudinal extension parallel to the longitudinal extension of the protective element 10, substantially equal to the width of the strap 20.

The width of the strap 20, and therefore the hook tooth 24, is chosen so as to ensure tight adherence of the entire protective element 10 to the limb of the animal.

The fastening means 12 also include an attachment counter-plate 26 attached at the other end of the protective element 10 and including at least one attachment seat 28 suitable to be engaged by the hook tooth 24.

In accordance with a preferred embodiment, the attachment seat 28 is closed at the back, or from the opposite side to the insertion of the hook tooth, and at the sides.

The back closure of the seat 28 prevents dirt or water from seeping under the elastic strap 20. The side closure, however, also acts as a latch to longitudinally lock the hook tooth 24.

In one embodiment, the attachment seat is realized as a counter-tooth 30 facing forward. In other words, it substantially has the same shape of the hook tooth 24 but extends outward from the counter-plate 26 and facing forward.

According to the invention, given the fact that the attachment seat 28 has a considerable longitudinal extension, at least one transverse reinforcing rib 32 is provided which interrupts the housing of the hook tooth 24. In other words, the counter-tooth 30 is further connected to the counter-plate 26 by at least one intermediate wall 32 which realizes the reinforcement rib.

Correspondingly, the hook tooth 24 has at least on interruption 34 in correspondence with the rib 32.

In accordance with a preferred embodiment, the counter-plate 26 comprises two attachment seats 28, and spaced out so as to be engaged selectively by the hook tooth 24 depending on the size of the limb to be protected.

Advantageously, the attachment plate 22 comprises a tongue 36 suitable to permit the engagement and disengagement of the fastening device. For example, preferably, the tongue 36 tongue extends in an anterior direction, in continuation of the attachment plate 22, beyond the hook tooth. To facilitate the attachment, the tongue 36 has a knurled inner surface 36'.

In accordance with a preferred embodiment, the hook plate 22 and the counter-plate 26 are respectively stitched to elastic strap 20 and to the protective element 10.

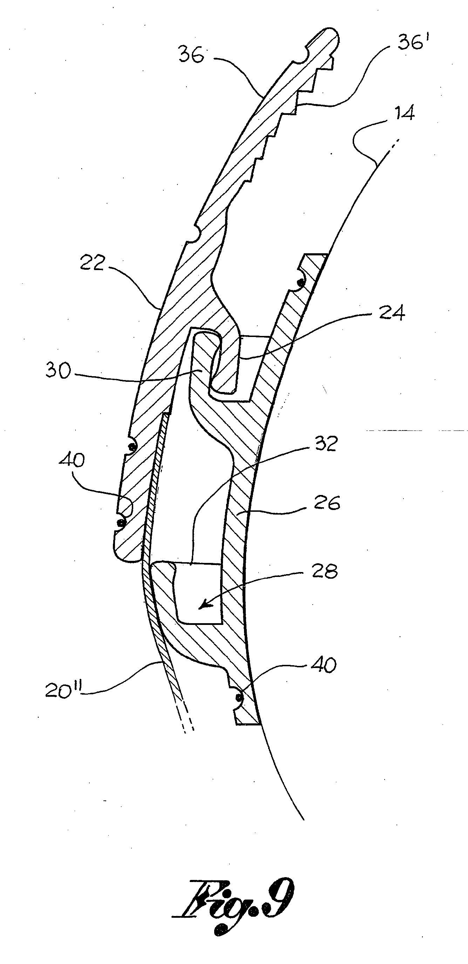

In the section of figure 9 grooves 40 can be seen in the two plates to accommodate the seams in order to protect them from contact with external bodies.

In accordance with an embodiment, the elastic strap 20 is fixed to the protective element 10 through an attachment plate 42, for example, also sewn to the protective element 10.

Advantageously, this attachment , plate 42 and the counter-plate 26 are attached to respective lower parts 44 of the protective element 10, in particular of the outer shell 14. Thus, these plates do not protrude excessively from the protective element 10.

However, note that the plates 26 and 42 have a reduced thickness so as to follow the profile and the morphology of the protective element 10.

From the description above it is clear how the proposed boot permits to meet the proposed aims. In fact, thanks to the presence of a single but extended elastic strap and its hook tooth, proportionate to the width of the strap, the fastening of the boot to the limb of the animal can be made with one easy motion.

Similarly, to remove the protective device, a slight outward pressure on the tongue 36 is sufficient to disengage the hook tooth 24 from the respective seat 28.

To the embodiment of the boot described above, a man skilled in the art may make changes, adjustments and replacements of equivalent elements in order to meet specific and incidental needs, all falling within the scope defined in the following claims. Each of the features described as belonging to a possible embodiment, can be independently achieved from the other embodiments described.

## Claims

1. Open-front boot (1) for horses, comprising a protective element (10) suitable to enclose at least partially a horse's limb and a fastening means (12) suitable to connect two ends of the protective element so as to fasten the protective element closely to the limb, wherein said fastening means (12) comprises a sole elastic strap (20) having one extremity attached to one end of the protective element and one free extremity, an attachment plate (22) fixed to said free extremity of the band and including at least one hook tooth (24) facing backwards and having a longitudinal extension essentially equal to the width of the band, and an attachment counter-plate (26) fixed to the other end of the protective element and including at least one attachment seat (28) suitable to be engaged by the hook tooth;
said boot (1) being **characterized in that** each attachment seat (28) is interrupted longitudinally by at least one rib or transversal reinforcement wall (32), the hook tooth (24) having at least one interruption at said wall or rib.

2. Open-front boot (1) according to the previous claim, wherein the attachment seat (28) is closed at the back and sides.

3. Open-front boot (1) according to claim 2, wherein the attachment seat (28) is made as a counter-tooth (30) extending from the counter-plate outwards and which faces forwards.

4. Open-front boot (1) according to any of the previous claims, wherein the counter-plate (26) comprises two attachment seats (28) parallel and spaced out so as to be engaged selectively by the hook tooth (24) depending on the size of the limb to be protected.

5. Open-front boot (1) according to any of the previous claims, wherein the attachment plate (22) comprises a tongue (36) suitable to permit the engagement and disengagement of the fastening device.

6. Open-front boot (1) according to the previous claim, wherein said tongue extends in an anterior direction, in continuation of the attachment plate, beyond the hook tooth.

7. Open-front boot (1) according to the previous claim, wherein the attachment plate and counter plate are attached to the elastic strap and to the protective element, respectively, by sewn seams.

8. Open-front boot (1) according to any of the previous claims, wherein the elastic strap is attached to the protective element by means of an attachment plate (42) sewn onto the protective element.

9. Open-front boot (1) according to claim 8, wherein the attachment plate and the counter hook plate are attached to respective lower parts (44) of the protective element (10).

10. Open-front boot (1) according to any of the previous claims, wherein the protective element comprises an outer shell (14) in rigid or semi-rigid plastic material, to which the elastic strap and the counter hook plate are attached, and a softer inner lining (16).

11. Open-front boot (1) according to claim 10, wherein a layer of silicon gel is applied to the inner lining.

## Patentansprüche

1. Vorne offene Gamasche (1) für Pferde, umfassend ein Schutzelement (10), das dafür geeignet ist, wenigstens teilweise ein Bein eines Pferdes einzuschließen, und ein Befestigungsmittel (12), das dafür geeignet ist, zwei Enden des Schutzelementes zu verbinden, um so das Schutzelement dicht an dem Bein zu befestigen, wobei das Befestigungsmittel (12) umfasst: einen einzigen elastischen Riemen (20), aufweisend ein Außenende, das an einem Ende des Schutzelementes angebracht ist, und ein freies Außenende, eine Anbringplatte (22), die an dem freien Außenende des Bandes fixiert ist und wenigstens einen Hakenzahn (24) mit einer Orientierung nach hinten und einer Längserstreckung aufweist, die im Wesentlichen gleich der Breite des Bandes ist, und eine Anbringgegenplatte (26), die an dem anderen Ende des Schutzelementes fixiert ist und wenigstens einen Anbringsitz (28) beinhaltet, der dafür geeignet ist, von dem Hakenzahn in Eingriff genommen zu werden;
wobei die Gamasche (1) **dadurch gekennzeichnet ist, dass** jeder Anbringsitz (28) längsläufig durch wenigstens eine Rippe oder Querverstärkungswand (32) unter-brochen ist, wobei der Hakenzahn (24) wenigstens eine Unterbrechung an der Wand oder Rippe aufweist.

2. Vorne offene Gamasche (1) nach dem vorherigen Anspruch, wobei der Anbringsitz (28) am Hinterende und den Seiten geschlossen ist.

3. Vorne offene Gamasche (1) nach Anspruch 2, wobei der Anbringsitz (28) als Ge-genzahn (30) ausgebildet ist, der sich von der Gegenplatte aus nach außen erstreckt und nach vorne orientiert ist.

4. Vorne offene Gamasche (1) nach einem der vorherigen Ansprüche, wobei die Ge-genplatte (26) zwei Anbringsitze (28) aufweist, die parallel und beabstandet sind, um selektiv von dem Hakenzahn (24) abhängig von der Größe des zu schützenden Beines in Eingriff genommen zu werden.

5. Vorne offene Gamasche (1) nach einem der vorherigen Ansprüche, wobei die Anbringplatte (22) eine Zunge (36) umfasst, die dafür geeignet ist, die Herstellung und Lösung eines Eingriffs der Befestigungsvorrichtung zu ermöglichen.

6. Vorne offene Gamasche (1) nach dem vorherigen Anspruch, wobei sich die Zunge in einer Richtung nach vorne als Fortsetzung der Anbringplatte über den Hakenzahn hin-aus erstreckt.

7. Vorne offene Gamasche (1) nach dem vorherigen Anspruch, wobei die Anbringplatte und die Gegenplatte an dem elastischen Riemen beziehungsweise dem Schutzelement durch genähte Nähte bzw. Säume angebracht sind.

8. Vorne offene Gamasche (1) nach einem der vorherigen Ansprüche, wobei der elas-tische Riemen an dem Schutzelement mittels einer Anbringplatte (42) angebracht ist, die an dem Schutzelement angenäht ist.

9. Vorne offene Gamasche (1) nach Anspruch 8, wobei die Anbringplatte und die Ge-genhakenplatte an jeweiligen unteren Teilen (44) des Schutzelementes (10) angebracht sind.

10. Vorne offene Gamasche (1) nach einem der vorherigen Ansprüche, wobei das Schutzelement eine Außenhülle (14) aus festem oder halbfestem Kunststoffmaterial, an der der elastische Riemen und die Gegenhakenplatte angebracht sind, und eine weichere Innenfütterung (16) umfasst.

11. Vorne offene Gamasche (1) nach Anspruch 10, wobei eine Schicht aus Silizium- bzw. Silikongel auf die Innenfütterung aufgetragen ist.

## Revendications

1. Guêtre à face ouverte (1) pour chevaux comprenant un élément de protection (10) approprié pour entourer au moins partiellement le membre d'un cheval et un moyen de fixation (12) approprié pour raccorder deux extrémités de l'élément de protection afin de fixer l'élément de protection en le serrant sur le membre, dans laquelle ledit moyen de fixation (12) comprend une seule sangle élastique (20) ayant une extrémité fixée sur une extrémité de l'élément de protection et une extrémité libre, une plaque de fixation (22) fixée sur ladite extrémité libre de la bande et comprenant au moins une dent de crochet (24) orientée vers l'arrière et ayant une extension longitudinale essentiellement égale à la largeur de la bande, et une contre-plaque de fixation (26) fixée sur l'autre extrémité de l'élément de protection et comprenant au moins un siège de fixation (28) approprié pour être mis en prise par la dent de crochet ;
ladite guêtre (1) étant **caractérisée en ce que** chaque siège de fixation (28) est interrompu longitudinalement par au moins une nervure ou paroi de renforcement transversale (32), la dent de crochet (24) ayant au moins une interruption au niveau de ladite paroi ou nervure.

2. Guêtre à face ouverte (1) selon la revendication précédente, dans laquelle le siège de fixation (28) est fermé au niveau de l'arrière et des côtés.

3. Guêtre à face ouverte (1) selon la revendication 2, dans laquelle le siège de fixation (28) est réalisé sous la forme d'une contre-dent (30) s'étendant à partir de la contre-plaque vers l'extérieur et qui est orientée vers l'avant.

4. Guêtre à face ouverte (1) selon l'une quelconque des revendications précédentes, dans laquelle la contre-plaque (26) comprend deux sièges de fixation (28) parallèles et espacés afin d'être sélectivement mis en prise par la dent de crochet (24) en fonction de la taille du membre à protéger.

5. Guêtre à face ouverte (1) selon l'une quelconque des revendications précédentes, dans laquelle la plaque de fixation (22) comprend une languette (36) appropriée pour permettre la mise en prise et le dégagement du dispositif de fixation.

6. Guêtre à face ouverte (1) selon la revendication précédente, dans laquelle ladite languette s'étend dans une direction antérieure, en continuation de la plaque de fixation, au-delà de la dent de crochet.

7. Guêtre à face ouverte (1) selon la revendication précédente, dans laquelle la plaque de fixation et la contre-plaque sont fixées à la sangle élastique et à l'élément de protection, respectivement par des coutures cousues.

8. Guêtre à face ouverte (1) selon l'une quelconque des revendications précédentes, dans laquelle la sangle élastique est fixée à l'élément de protection au moyen d'une plaque de fixation (42) cousue sur l'élément de protection.

9. Guêtre à face ouverte (1) selon la revendication 8, dans laquelle la plaque de fixation et la contre-plaque de crochet sont fixées sur des parties inférieures (44) respectives de l'élément de protection (10).

10. Guêtre à face ouverte (1) selon l'une quelconque des revendications précédentes, dans laquelle l'élément de protection comprend une coque externe (14) en matière plastique rigide ou semi-rigide, sur laquelle la sangle élastique et la contre-plaque de crochet sont fixées, et un revêtement intérieur plus souple (16).

11. Guêtre à face ouverte (1) selon la revendication 10, dans laquelle une couche de gel de silicone est appliquée sur le revêtement intérieur.
